# EUROPÄISCHE PATENTSCHRIFT

(11) **EP 2 655 013 B1**
(45) Veröffentlichungstag und Bekanntmachung des Hinweises auf die Patenterteilung: **20.08.2014**
(21) Anmeldenummer: 11808848.3
(22) Anmeldetag: 20.12.2011
(51) Int. Cl.: B24B 13/005

(54) **VORRICHTUNG ZUM AUFBLOCKEN VON BRILLENGLÄSERN**
DEVICE FOR BLOCKING EYEGLASS LENSES
DISPOSITIF POUR BLOQUER DES VERRES DE LUNETTES

(30) Priorität: 22.12.2010 DE 102010055502; 25.01.2011 DE 102011009400
(43) Veröffentlichungstag der Anmeldung: 30.10.2013
(73) Patentinhaber: Schneider GmbH & Co. KG, 35112 Fronhausen (DE)
(72) Erfinder: SCHNEIDER, Gunter, 35037 Marburg (DE); BUCHENAUER, Helwig, 35232 Dautphetal-Buchenau (DE); BÖRNER, Ulf, 72805 Lichtenstein (DE); KRÄMER, Klaus, 35232 Dautphetal-Friedensdorf (DE)
(74) Vertreter: Thews, Gustav
(86) Internationale Anmeldenummer: PCT/EP2011/073459
(87) Internationale Veröffentlichungsnummer: WO 2012/084988

(56) Entgegenhaltungen:
- EP-A1- 1 839 810
- WO-A1-2009/010466
- DE-A1- 4 414 784
- JP-A- 2001 259 982

## Beschreibung

Die Erfindung bezieht sich auf eine Vorrichtung zum Aufblocken von Brillengläsern bzw. Brillenglas-Halbzeugen oder Halbzeugen, auf Blockstücke unter Anwendung einer Verbindungsmasse, mittels welcher das Brillenglas mit einer fertigen oder noch zu bearbeitenden ersten Seite mit dem Blockstück form- und/oder kraftschlüssig verbunden wird, aufweisend mehrere Stationen, zwischen denen das Brillenglas und/oder das Blockstück transportiert wird, mindestens eine Station, die als Blockstation ausgebildet ist, in der das Blockstück unter Anwendung der Verbindungsmasse mit dem Brillenglas verbunden wird, einen Transportarm mit einem daran angeordneten Haltekopf zum Positionieren des Brillenglases in zumindest der Blockstation, wobei der Transportarm als Schwenkarm ausgebildet ist und mindestens eine Schwenkachse S1 aufweist, mittels welcher der Transportarm mit dem Haltekopf zwischen mindestens zwei Stationen bewegbar ist, **und mindestens ein Förderarm mit einem Halter für das Blockstück oder ein Brillenglas vorgesehen ist.**

Die Erfindung bezieht sich ebenfalls auf ein Verfahren zum Aufblocken eines Brillenglases bzw. Brillenglas-Halbzeugs oder auf ein Blockstück, bei dem ein erstes Brillenglas von einem Brillenglasvorrat an den Transportarm übergeben wird, das erste Brillenglas vom Transportarm in eine erste Block-station abgegeben wird und anschließend auf das erste Blockstück aufgeblockt wird, um dann für eine Abkühlzeit in der Blockstation belassen zu werden.

Es ist bereits eine Vorrichtung zum Aufblocken von Brillengläsern aus der DE 10 2008 023 093 A1 bekannt. Diese weist eine Messstation zum Erfassen der Orientierung und der Geometrieinformationen des zu blockenden Werkstücks, eine Blockstation, in der das Werkstück mittels eines temporar verformbaren Blockmaterials auf einem Blockstück aufblockbar ist, und eine einen Haltekopf für das Werkstuck aufweisende Transporteinrichtung auf, mittels welcher eine Relativbewegung zwischen dem am Haltekopf gehaltenen Werkstuck einerseits und der Messstation sowie der Blockstation andererseits erzeugbar ist. Um einen moglichst universellen Einsatz der Blockvorrichtung zu ermöglichen, weist die Transporteinrichtung insgesamt zwei translatorische und drei rotatorische Bewegungsachsen (X, Z, A, B, C) auf, mittels welcher das Werkstück unter Berücksichtigung der in der Messstation erfassten Orientierung und Geometrieinformationen relativ zu einem sich in der Blockstation befindenden Blockstück definiert positionierbar und während des Aufblockens in der definierten Relativlage zum Blockstück unter Belassung eines Blockmaterial-Aufnahmespalts zwischen Werkstuck und Blockstück haltbar ist. Zusätzlich ist ein Schwenkarm vorgesehen, mittels dessen die Linse zwischen Vorratskasten und einer Vertikaleinheit transportierbar ist. Alternativ kann das Blockstück ausgehend von einem Vertikalzylinder mit dem Schwenkarm in die Blockstation abgegeben werden.

Aus der DE 10 2004 021 696 A1 ist eine Aufblockstation fur mindestens eine optische Linse mit mindestens einem Aufblockgerat zur Anbringung eines Blockstücks an der optischen Linse bekannt, bei dem eine Beschichtungseinheit fur die Linse, eine Erkennungseinheit zur Erkennung von Linsen-typen und/oder Markierungen auf der Linse sowie eine Transporteinheit zum Transport der Linsen zwischen der Beschichtungseinheit, der Erkennungseinheit und dem Aufblockgerät vorgesehen sind. Die Transporteinheit weist funf rotatorische Bewegungsachsen auf.

**In der** WO 2009/010466 A1 **wird eine Vorrichtung zum Aufblocken von Brillengläsern gebildet aus einem Drehtisch, um den herum drei Schwenkarme zum Transport des Brillenglases, der Blockstücke sowie der fertig aufgeblockten Baugruppe vorgesehen sind, beschrieben.**

Der Erfindung liegt die Aufgabe zugrunde, eine Vorrichtung zum Aufblocken von Brillengläsern sowie ein Verfahren hierzu derart auszubilden und anzuordnen, dass eine möglichst schnelle Taktung **und eine genaue Positionierung** fur den Aufblockvorgang **bei gleichzeitig geringem baulichen Aufwand und kompakter Große** gewahrleistet **sind.**

Gelöst wird die Aufgabe erfindungsgemäß dadurch, dass der Forderarm eine **koaxial** zur Schwenkachse S1 angeordnete Schwenkachse S2 aufweist, mittels welcher der Halter zwischen mindestens zwei Stationen bewegbar ist, **wobei mindestens eine Blockstation ortsfest ausgebildet ist.** Mit dem koaxial zum Transportarm schwenkbar angeordneten Förderarm, der vorzugsweise das Brillenglas oder ein Blockstuck transportieren kann, ist die zeitgleiche bzw. synchrone Bestückung bzw. der synchrone Transport von verschiedenen Bril-lengläsern und/oder Blockstucken möglich, womit insgesamt eine optimale Taktfrequenz für die so arbeitende Blockvorrichtung gewährleistet ist. Der Halter des Forderarms ist vorzugsweise als Saugglocke ausgebildet, zumindest doch so ausgebildet, dass er sowohl ein Blockstück als auch ein Brillenglas bzw. Halbzeug halten kann. Durch die Ausbildung des Transport- und Forderarms als Schwenkarm mit der Schwenkachse S1, S2 ist eine gunstige Ausnutzung des vorhandenen Platzangebots, mithin eine vorteilhafte Große der Blockeinrichtung insgesamt gewahrleistet. Die damit einhergehenden Takt- und Verfahrzeiten lassen sich somit ebenfalls optimieren.

Gelost wird die Aufgabe auch durch das oben genannte Verfahren, bei dem während der Abkühlzeit ein zweites Brillenglas durch den Transportarm aufgenommen wird, welches über den Transportarm in die zweite Blockstation abgegeben wird und während **dieses** Transportvorgangs und vor dem Abgeben des jeweiligen Brillenglases an die jeweilige **ortsfeste** Blockstation der Forderarm ein Blockstück aus einem Block-stückvorrat entnimmt und in der entsprechenden Blockstation ablegt. Da bei einem hier angewendeten Aufblockverfahren mit Abkühlzeiten von mehreren Sekunden zu rechnen ist, kann nach dem erfindungsgemäßen Verfahren die Taktzeit der Blockvorrichtung insgesamt verbessert werden, weil einerseits der Transportarm während des Aufblock- bzw. Abkühlvorgangs eines Brillenglases den Transport eines zweiten Brillenglases vornimmt und andererseits der gleichfalls als Schwenkarm ausgebildete Forderarm den Transport der Blockstücke, die vor dem Aufblocken in der Blockstation platziert werden müssen, ausfuhrt. **Hierbei werden der Transportarm und der Förderarm in Bezug auf die jeweilige Schwenkachse S1, S2 koaxial zueinander bewegt und somit alle ortsfesten Stationen erreicht.** Während des Transportes bzw. auf dem Weg zur Blockstation erfolgt vorzugsweise die optische Auswertung des Brillenglases. Von der Aufnahme des vorzugsweise ausgerichteten Brillenglases durch den Trans-portarm bis zur Ablage in der Blockstation wird dies stets durch den Transportarm gehalten. Somit wird die Kenntnis der relativen Lage zur Blockstation und somit die gewunschte Genauigkeit des Blockvorgangs gewährleistet. Der Haltekopf des Transportarms weist vorzugsweise zwei Kippachsen K1, K2 auf, über die das Brillenglas aus der Transportebene heraus in jede beliebige Lage gekippt werden kann. Während der schwenkbare Transportarm mit dem Transport des jeweiligen Brillenglases beschäftigt ist, kann mittels des Förder-arms der Transport der Blockstücke, die vor dem Aufblocken in der Blockstation platziert werden müssen, ausgeführt werden. Diese Arbeitsabläufe können mithin synchron und damit in kürzester Zeit erfolgen.

**Vorteilhaft wäre auch** eine Vorrichtung zum Aufblocken von Brillengläsern auf Blockstücke unter Anwendung einer Verbindungsmasse, mittels welcher das Brillenglas mit dem Blockstück form- und/oder kraftschlüssig verbunden wird, aufweisend:
- mindestens eine Blockstation, in der das Blockstück unter Anwendung der Verbindungsmasse mit dem Brillenglas verbunden wird,
- mindestens eine Übergabeeinheit zur Aufnahme von Brillengläsern aus einem Brillenglasvorrat;
- einen Transportarm mit einem daran angeordneten, zwei Kippachsen K1, K2 aufweisenden Haltekopf zum Positionieren des Brillenglases in der Blockstation, wobei der Transportarm mindestens eine Translationsachse T1 aufweist, mittels welcher der Transportarm mit dem Haltekopf relativ zur Blockstation bewegbar ist, wobei der Transportarm als Schwenkarm ausgebildet ist und mindestens eine Schwenkachse S1 aufweist, mittels welcher der Transportarm mit dem Haltekopf zwischen der Übergabeeinheit und der Blockstation bewegbar ist, und der Haltekopf eine Translationsachse T2 aufweist, mittels welcher der Haltekopf relativ zum Transportarm bewegbar ist. Diese Art der Achskombination gewährleistet eine schnelle und genaue Taktung für den Aufblockvorgang.

Vorteilhaft kann es hierzu auch sein, wenn der Transportarm mindestens eine Translationsachse T1 aufweist, mittels welcher der Transportarm mit dem Haltekopf relativ zur Blockstation bewegbar ist und/oder dass der Haltekopf eine Translationsachse T2 aufweist, mittels welcher der Haltekopf relativ zum Transportarm bewegbar ist. Die Translationsachse T2 ist vorzugsweise radial zur Schwenkachse S1 ausgerichtet, so dass der Haltekopf im Bereich eines bogen- bzw. kreisringförmigen Sektors beliebig positionierbar ist. Die Translationsachse T2 gewährleistet in Kombination mit der Schwenkachse S1 sowie den beiden Kippachsen K1 und K2, dass das Brillenglas in der Blockstation beliebig positioniert werden kann.

Ferner kann es vorteilhaft sein, wenn der halter eine Translationsachse T3 aufweist, mittels welcher der Halter relativ zum Forderarm zumindest mit einer Richtungskomponente parallel zur Schwenkachse S2 bewegbar ist. Da die Schwenkbewegung des Transportarms um die Schwenkachse S1 und die Schwenkbewegung des Förderarms um die Achse S2 unabhangig voneinander erfolgen konnen, gewährleistet die Translationsachse T3, dass der Transportarm auch betreffend die Anhebe- bzw. Absenkbewegungen unabhängig von der Anhebe- bzw. Absenkbewegung des Förderarms bzw. der Translationsachse T1 ist. Die Translationsachse T3 weist hierbei zumindest eine Richtungskomponente parallel zur Schwenkachse S2 auf.

Vorteilhaft kann es auch sein, wenn eine Station als Ausrichtstation ausgebildet ist, die ein Anlageelement aufweist, gegen das das Brillenglas bzw. Halbzeug zum Ausrichten der relativen Lage zwischen dem Brillenglas und dem Haltekopf anlegbar ist. Damit ein präziser Blockvorgang gewahrleistet werden kann, ist es notwendig, die Ausrichtung und Lage des zu blockenden Brillenglases relativ zum Transportarm zu definieren. Da das Brillenglas in der Regel in einer Transportkiste mittels Forderband vorgehalten wird, in der eine präzise Lage nicht gewährleistet werden kann, ist als Weiterbildung der Erfindung die Ausrichtstation mit dem Anlageelement vorgesehen, um eine definierte Lage des Brillenglases relativ zum Anlageelement und damit relativ zum Haltekopf zu gewahrleisten. Das Anlegen des Brillenglases gegen das Anlageelement erfolgt vorzugsweise durch eine Ubergabeeinheit, mit der die Blockvorrichtung bzw. der Transportarm vom Brillenglasvorrat bedient wird.

Dabei kann es vorteilhäfterweise vorgesehen sein, dass die Ausrichtstation eine Translationsachse T4 aufweist, mittels welcher das Anlageelement relativ zum Transportarm bewegbar ist. Da das Brillenglas zwecks Anlage gegen das Anlageelement von unten über die Ausrichtstation bzw. deren Halteteil angelegt wird und der Haltekopf bei der Übergabe zum Transportarm von oben an das Brillenglas herangefuhrt wird, befindet sich das Anlageelement der Ausrichtstation sozusagen zwischen dem Haltekopf und dem Brillenglas. Damit der Haltearm nun verschwenkt werden kann, ist es notwendig, die Anlageelemente zu entfernen. Dies erfolgt vorzugsweise über die Translationsachse T4, damit der Transportarm mit dem Haltekopf um die Schwenkachse S1 zu der jeweiligen Blockstation verschwenkt bzw. verfahren werden kann.

Von besonderer Bedeutung kann fur die vorliegende Erfindung sein, wenn das Anlageelement zwei Anlagedorne aufweist, die zwischen den Haltekopf und ein daran befestigtes Brillen-glas bringbar sind. Die Anlagedorne gewahrleisten die Anwendung eines Haltekopfes mit drei Haltestiften, die über den Umfang verteilt das Brillenglas in radialer Richtung fassen. Da das Anlageelement bzw. die beiden Anlagedorne zwischen dem Haltekopf und dem Brillenglas sandwichartig aufgenommen sind, werden durch die Anwendung von Haltedornen die hier bestehenden Platzverhaltnisse in den Lucken zwischen den drei Haltestiften des Haltekopfes günstig ausgeschopft.

Im Zusammenhang mit der erfindungsgemäßen Ausbildung und Anordnung kann es von Vorteil sein, wenn eine Übergabeeinheit und ein Brillenglasvorrat vorgesehen sind, wobei die Übergabeeinheit zur Aufnahme aus dem Brillenglasvorrat und zur Abgabe an den Brillenglasvorrat dient und die Übergabeeinheit aufweist: a) eine erste Schwenkachse S3, mittels welcher das Brillenglas zwischen einem Brillenglasvorrat und der Ausrichtstation oder dem Transportarm bewegbar ist, b) eine zweite Schwenkachse S4, über die der Schwenkarm und somit das daran befestigte Brillenglas in eine Upside-down-Lage bringbar ist. Das Halbzeug bzw. Brillenglas wird in der Regel mit der konkaven, zu bearbeitenden Seite aufliegen, also nach unten zeigend in der Transportkiste bereitgestellt, damit zum einen die Lage stabil ist und zum anderen die konvexe, bereits fertig bearbeitete Seite nicht durch den Transportvorgang beschädigt wird. Zwecks Übergabe an den Transportarm und Anlage gegen das vorgehend beschriebene Anlageelement der Ausrichtstation ist es notwendig, das an der konvexen Seite gehaltene Brillenglas zu drehen (upside-down), so dass die konkave und ehemalige Auflageseite nach oben orientiert wird und somit von unten gegen die Anlageelemente angelegt werden kann. Dies wird durch die Schwenkachse S4 gewährleistet. Die Schwenkachse S3 gewährleistet letztlich den Übergabeprozess von der Transportkiste auf dem Transportband in die Aufblockvorrichtung hinein. Ferner weist die Übergabeeinheit eine zweite Translationsachse T5 auf, die die Anhebe- bzw. Absenkbewegung der Übergabeeinheit gewährleistet.

Vorteilhaft kann es ferner sein, wenn eine Station als Drehstation mit einer Drehachse D1 ausgebildet ist, mittels welcher das Blockstück mit dem aufgeblockten Brillenglas zumindest anteilig um eine Mittelachse des Blockstücks drehbar ist. Die relative Lage zwischen dem jeweiligen Brillenglas und dem daran anzubringenden Blockstück wird in der jeweiligen Blockstation festgesetzt. Damit nach der Entnahme des aufgeblockten Brillenglases eine durch die Transportkiste vorgegebene Ausrichtung gewährleistet ist, ist vorstehend genannte Drehstation vorgesehen, die das Brillenglas mit dem Blockstück mit Bezug auf die Blockstückmittelachse so in Drehrichtung orientiert, dass das Blockstück nach Übergabe mittels der Übergabeeinheit und der damit einhergehenden Verschwenkbewegung in der richtigen Orientierung in die Transportkiste abgelegt werden kann. Die Drehstation befindet sich im Aktionsbereich zumindest des Förderarms sowie der Übergabeeinheit.

Außerdem kann es vorteilhaft sein, wenn mindestens zwei oder drei Blockstationen vorgesehen sind, die jeweils über den Transportarm und den Förderarm anfahrbar sind und/oder dass eine Station als Blockstückvorrat ausgebildet ist, der zumindest über den Förderarm anfahrbar ist. Mit der Anwendung von drei Blockstationen kann auch bei längeren Abkühlzeiten von mehr als 30 Sekunden eine für die Aufblockvorrichtung insgesamt optimale Taktzeit erreicht werden. Die drei Blockstationen können sowohl mit Blockstücken aus dem Blockstückvorrat als auch mit Brillengläsern über den Transportarm sowie den Förderarm versorgt werden, so dass mit Rücksicht auf den Übergabe- und Annahmetakt der Übergabeeinheit ein optimaler Arbeitstakt insgesamt gewährleistet ist. Mit einem integrierten Blockstückvorrat ist eine weitergehende Automatisierung des Aufblockprozesses gewährleistet.

Ferner kann es vorteilhaft sein, wenn eine Dosiereinheit für Verbindungsmasse vorgesehen ist, die eine Bewegungsachse B1 aufweist und über die die Dosiereinheit an mindestens zwei verschiedenen Positionen P1, P2, P3 im Bereich der jeweiligen Blockstation positionierbar ist. Entsprechend der Taktzeiten der verschiedenen Blockstationen können diese über die verfahrbar angeordnete Dosiereinheit mit Verbindungsmasse versorgt werden, so dass auch den Temperaturbedingungen der Verbindungsmasse Genüge getan werden kann. Fur das erfindungsgemäße Verfahren kann es von Vorteil sein, wenn der Förderarm nach der Abkühlzeit das aufgeblockte Brillenglas mit einem Blockstuck der jeweiligen Blockstation entnimmt und der Übergabeeinheit oder der Drehstation zuführt. Da der Forderarm sowohl ein Blockstuck als auch ein Brillenglas mit daran befestigtem Blockstück transportieren kann, ist der Entladevorgang der jeweiligen Blockstation durch den Forderarm ebenfalls synchron mit dem Transport der zu blockenden Brillengläser durch den Transportarm möglich. Die Blockstucke weisen eine geschlossene und soweit ansaugfahige Oberfläche auf und sind somit wie auch die Brillengläser insbesondere über eine Saugglocke des Forderarms zu halten.

Ferner kann es vorteilhaft sein, wenn das Brillenglas zwecks Ausrichtung der relativen Lage zum Forderarm mittels der Übergabeeinheit oder mittels des Transportarms gegen das Anlageelement zur Anlage gebracht wird. Wie vorgehend bereits beschrieben gewährleistet das Ausrichten des Brillenglases am Anlageelement eine definierte relative Lage des Brillenglases fur den weiteren Aufblockvorgang. Die Anlage gegen das Anlageelement erfolgt vorzugsweise von unten, so dass der Forderarm das ausgerichtete Brillenglas von oben greifen kann.

Letztlich kann es von Vorteil sein, wenn die Haltekraft der Übergabeeinheit oder des Transportarms beim Anlegen gegen das Anlageelement verkleinert wird, damit eine Relativbewegung des Brillenglases relativ zur Übergabeeinheit bzw. relativ zum einen Halteteil der Übergabeeinheit ermöglicht wird. Zwecks Reduktion der Haltekraft der Übergabeeinheit wird vorzugsweise die Haltekraft einer Halteglocke der Übergabeeinheit reduziert bzw. auf null oder nahezu null gesetzt, so dass eine Relativbewegung zwischen dem Brillen-glas und der Übergabeeinheit bzw. der Halteglocke einfach möglich ist. Alternativ wäre es auch möglich, die Halteglocke oder ein ähnliches Halteelement derart flexibel auszubilden, dass die Ausrichtbewegung des Brillenglases relativ zum Anlageelement bei gleichzeitiger elastischer Verformung des Halteteils erfolgt, so dass letztlich das Brillenglas dem Anlageelement nach ausgerichtet werden kann.

Weitere Vorteile und Einzelheiten der Erfindung sind in den Patentansprüchen und in der Beschreibung erläutert und in den Figuren dargestellt. Es zeigen:

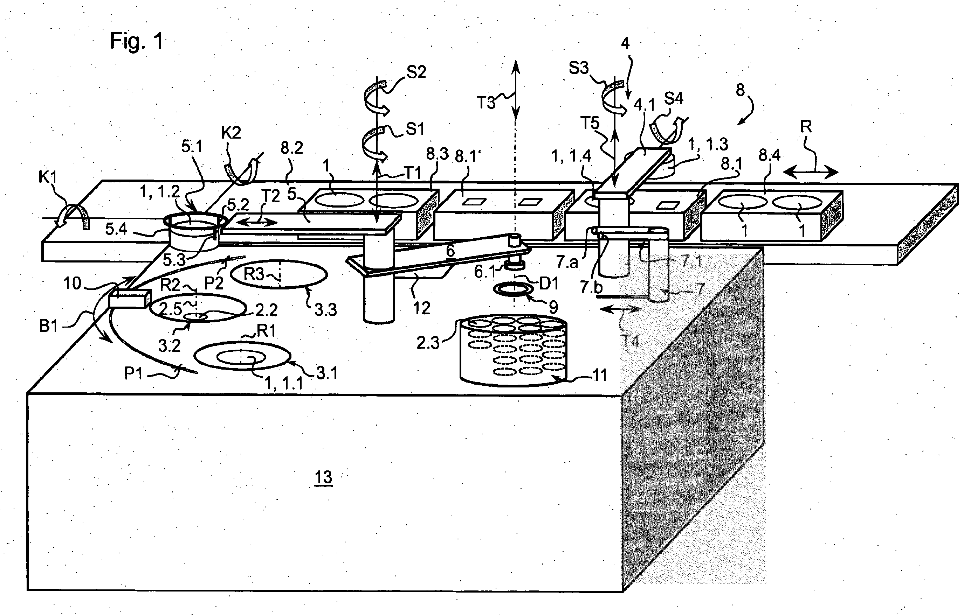

- Figuren 1 bis 3: eine Prinzipskizze einer erfindungsgemäßen Aufblockvorrichtung in verschiedenen Bearbeitungsstadien.

Eine nach Figur 1 im Prinzip dargestellte Aufblockvorrichtung weist ein Maschinengestell 13 auf, welches an die Rückseite angrenzend ein Förderband 8.2 für Transportkisten 8.1, 8.1', 8.3, 8.4 für Brillengläser 1 bzw. Halbzeuge aufweist.

Mittels einer Übergabeeinheit 4 werden Brillengläser 1 von der jeweiligen Transportkiste 8.1 übernommen. Die Übergabeeinheit 4 ist als Schwenkarm ausgebildet und weist eine Schwenkachse S3, eine Translationsachse T5 sowie eine zweite Schwenkachse S4 zum Drehen des Brillenglases 1.3 in eine Upside-down-Position auf. In etwa der Mitte des Maschinengestells 13 ist ein Transportarm 5 vorgesehen, der ebenfalls als Schwenkarm mit einer Schwenkachse S1 ausgebildet ist. Darüber hinaus weist der Transportarm 5 eine erste Translationsachse T1 sowie eine in radialer Richtung zur Schwenkachse S1 verlaufende Translationsachse T2 auf. Ergänzend zu dem Transportarm 5 ist ein Förderarm 6 vorgesehen, der ebenfalls als Schwenkarm ausgebildet ist. Der Förderarm 6 weist eine Schwenkachse S2 auf, die koaxial zur Schwenkachse S1 angeordnet ist. Am Kopfende des Forderarms 6 weist dieser eine Translationsachse T3 auf, die zumindest einen Bewegungsanteil parallel zur Schwenkachse S2 gewährleistet. Ebenso besitzt die Translationsachse T1 einen Bewegungsanteil parallel zur Schwenkachse S1. Der Transportarm 5 und der Förderarm 6 können gleichzeitig und unabhängig voneinander um die Schwenkachse S1, S2 verschwenkt werden.

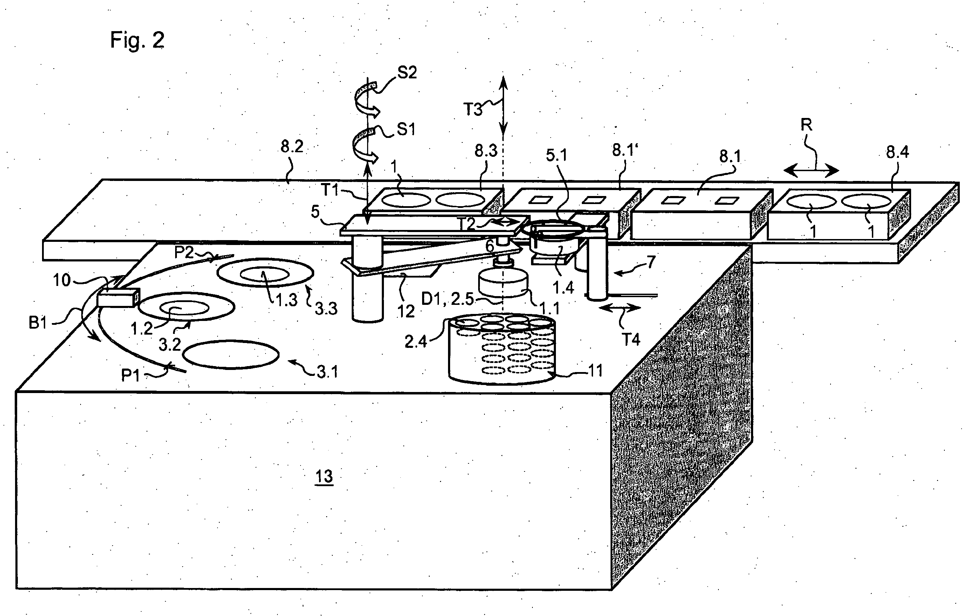

Im Schwenkbereich des Transportarms 5 sowie des Förderarms 6 sind auf dem Maschinengestell 13 drei Blockstationen 3.1, 3.2, 3.3 dem Schwenkradius des Transportarms 5 bzw. des Forderarms 6 nach teilkreisförmig angeordnet. Im weiteren Verlauf dieser teilkreisformigen im Schwenkradius befindlichen Anordnung weist das Maschinengestell 13 eine optische Auswerteeinheit 12, eine Drehstation 9, eine Ausrichtstation 7 sowie einen daran in Kreisrichtung anschließenden Blockstuckvorrat 11 auf. Die Übergabeeinheit 4 bzw. deren Schwenkarm 4.1 befindet sich wie in Figur 2 dargestellt in der nach innen geschwenkten Position ebenfalls im Aktionsradius des Transport- und Forderarms 5, 6.

Gemäß Figur 1 befindet sich in der ersten Blockstation 3.1 das erste Brillenglas 1.1, welches oberhalb eines nicht dargestellten Blockstucks zwecks Verbindung mit diesem positioniert ist.

Der Transportarm 5 weist einen Haltekopf 5.1 auf, der relativ zum Transportarm 5 um zwei rechtwinklig zueinander angeordnete Kippachsen K1, K2 am Transportarm 5 bewegbar angeordnet ist. Darüber hinaus ist der Haltekopf 5.1 über eine Translationsachse T2 in radialer Richtung zur Schwenkachse S1 relativ zum Transportarm 5 bewegbar. Damit ist je-de Station auf der Aufblockvorrichtung und jede relative Lage zur Blockstation 3.1 - 3-3 erreichbar. Die Ausrichtung zwischen dem Blockstück 2.1 - 2.4 und dem Brillenglas 1.1 - 1.4 in Bezug auf die Mittelachse 2.5 des Blockstucks erfolgt über eine Rotationsachse R1 - R3 der jeweiligen Blockstation. Mittels der Kippachsen K1, K2 und der Translationsachse T2 lasst sich das Brillenglas 1 bzw. das Brillenglas mit Bezug zur Horizontalen beliebig ausrichten und somit in jeder beliebigen Lage relativ zu einem Blockstück 2.2 positionieren. Die mechanische Umsetzung der Kippachsen K1, K2 ist beliebig wahlbar. Letztlich muss ein Antrieb mit mehreren Bewegungsachsen derart gewählt werden, dass mit jeder Bewegungsachse zumindest eine anteilige Bewegung um zumindest eine der Kippachsen K1, K2 gewährleistet ist.

Oberhalb der zweiten Blockstation 3.2 ist mittels des Haltekopfes 5.1 ein Brillenglas 1.2 positioniert, das der Transportarm 5 aus der Ausrichtstation 7 entnommen und zur zweiten Blockstation 3.2 transportiert hat. Innerhalb der zweiten Blockstation 3.2 ist das Blockstuck 2.2 abgelegt, welches der Förderarm 6 während des vorgenannten Transportvorgangs aus dem Blockstuckvorrat 11 entnommen und dort über die Translationsachse T3 vorab abgelegt hat. Die dritte Blockstation 3.3 ist derzeit unbefüllt. Ein dafur vorge-sehenes Brillenglas 1.3 befindet sich in der Übergabeeinheit 4. Der Schwenkarm 4.1 hat das Brillenglas 1.3 über seine Translationsachse T5 bereits angehoben. Durch Schwenken um die Schwenkachse S3 wird dieses in den Bereich des Transportarms 5 gemäß Figur 2 gebracht und von diesem transportiert. Während dessen kann über den Forderarm 6 entweder das erste Brillenglas 1.1 aus der ersten Blockstation 3.1 entnommen oder die dritte Blockstation 3.3 mit einem Blockstuck 2.3 befullt werden.

Ferner ist auf dem Maschinengestell 13 die Ausrichtstation 7 mit einem Anlageelement 7.1 vorgesehen, welches aus zwei Anlagedornen 7a, 7b besteht. Das Anlageelement 7.1 dient der Ausrichtung des Brillenglases 1.1 relativ zum Transportarm 5 wie nachstehend anhand Figur 2 erläutert.

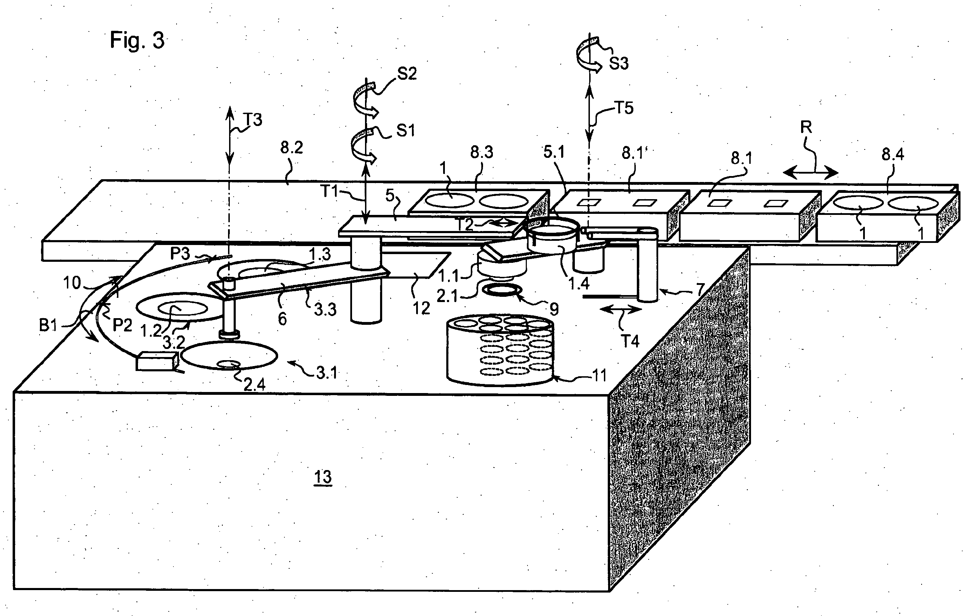

Nach Figur 2 ist inzwischen die Blockstation 3.3 mit einem Brillenglas 1.3 befullt bzw. das Brillenglas 1.3 an das Blockstück 2.3 geblockt. Ein viertes Brillenglas 1.4 aus der Transportkiste 8.1 befindet sich in der Übergabeeinheit 4 im Bereich des Transportarms 5. Über die Schwenkachse S4 des Schwenkarms 4.1 ist das Brillenglas 1.4 in eine Upside-down-Position mit Bezug zur Lage in der Transportkiste 8.1 geschwenkt worden. Über den Schwenkarm 4.1 wird das Brillenglas 1.4 in dieser Upside-down-Position von unten gegen die beiden Anlagedorne 7a, 7b der Ausrichtstation 7 angelegt. Hierzu verfahrt die Ausrichtstation 7 über ihre Translationsachse T4 gemäß Figur 2 nach links in den Bereich des Aktionsradius des Transportarms 5. Zwecks Gewährleistung der Ausrichtung des Brillenglases 1.4 an den beiden Anlagedornen 7a, 7b wird die Haltekraft des Schwenkarms 4.1 bzw. eines nicht weiter dargestellten Halteteils wie bspw. eine Saugglocke zumindest kurzzeitig gelöst bzw. reduziert, so dass eine Ausrichtung des Brillen-glases 1.4 an den beiden Anlagedornen 7a, 7b ohne bzw. ohne übermäßige elastische Verformung des Halteteils gewährleistet ist. Sobald diese Ausrichtung erfolgt ist, wird das Brillenglas 1.1 über den Haltekopf 5.1 des Transportarms 5 gegriffen. Hierzu weist der Haltekopf 5.1 drei Haltestif-te 5.2, 5.3, 5.4 auf, die das Brillenglas 1.4 in radialer Richtung spannen. Das Brillenglas 1.1 wird über den Haltekopf 5.1 über den gesamten Transportvorgang gehalten, auch in der Auswerteeinheit. Ein Losen erfolgt erst in der Blockstation 3.1, 3.2. Damit der Transportarm 5 nun um sei-ne Schwenkachse S1 in Richtung einer Blockstation 3.1, 3.3 verschwenken kann, fährt die Ausrichtstation 7 über ihre Translationsachse T4 nach rechts weg und gibt den Haltekopf 5.1 mit Bezug zur Schwenkbewegung gemäß Figur 3 frei.

Die beiden Anlagedorne 7a, 7b sind also nach dem Anfahren des Haltekopfes 5.1 zu dem nun ausgerichteten Brillenglas 1 sandwichartig zwischen dem Brillenglas 1 und dem Haltekopf 5.1 aufgenommen. Entsprechend der Ausrichtung des Haltekopfes 5.1 befindet sich einer der Haltestifte 5.2 zwischen den beiden Anlagedornen 7a, 7b, so dass das vorgehend beschriebene Verfahren der Anlagedorne 7a, 7b bzw. der Ausrichtstation 7 in Richtung der Translationsachse T4 zwecks Verschwenkung des Transportarms 5 vorteilhaft ist. Die Ausrichtung bzw. Platzierung der Haltestifte erfolgt den vorliegenden Bauraumverhältnissen nach. Insbesondere ist die Anwendung eines Halteteils für das aufgeblockte Brillenglas zu berücksichtigen.

Gemäß Figur 2 ist das aufgeblockte erste Brillenglas 1.1 inklusive nicht dargestelltem Blockstück mittels des Förderarms 6 bereits in der Drehstation 9 abgelegt, wo dessen Position in Bezug auf eine Mittelachse 2.5 eines Blockstücks 2.1 zwecks Übergabe an die Transportkiste 8.1 ausgerichtet wird.

Der Blockstückvorrat 11 ist insoweit um drei Blockstücke 2.1, 2.2, 2.3 dezimiert, nämlich das Brillenglas 1.1 in der Drehstation, das Brillenglas 1.2 in der Blockstation 3.2 und das Brillenglas 1.3 in der Blockstation 3.3.

Nach Figur 3 ist ein weiteres Blockstück 2.4 aus dem Blockstückvorrat 11 in die Blockstation 3.1 abgelegt worden. Der Ablagevorgang erfolgt über die Translationsachse T3 des Förderarms 6. Das in der Drehstation 9 befindliche Brillen-glas 1.1 mit dem befestigten Blockstuck 2.1 ist nunmehr mittels der Übergabeeinheit 4 bzw. des Schwenkarms 4.1 unter Anwendung der Translationsachse T5 aufgenommen und aus der Drehstation 9 entnommen. Im Anschluss daran wird der Schwenkarm 4.1 um seine Schwenkachse S3 verschwenken und unter Anwendung der Translationsachse T5 das aufgeblockte Brillenglas 1.1 in die Transportkiste 8.1 mit entsprechender Ausrichtung in Umfangsrichtung ablegen. Das im Haltekopf 5.1 befindliche Brillenglas 1.4 wird zeitgleich über den Transportarm 5 in die Blockstation 3.1 übergeben, wo es mit dem dort befindlichen Blockstuck 2.4 verbunden wird. Zwecks Bereitstellung der notwendigen Verbindungsmasse verfahrt eine Dosiereinheit 10 in Richtung ihrer Bewegungsachse B1, welche sich teilkreisförmig entsprechend der Anordnung der Blockstationen 3.1 bis 3.3 am Maschinengestell 13 befindet. Die Dosiereinheit 10 lasst sich über ihre Bewegungsachse B1 in zumindest drei Position P1, P2, P3 an der jeweiligen Blockstation 3.1, 3.2, 3.3 positionieren. Nach dem Abgeben von Verbindungsmasse gemäß Figur 1 an der Blockstation 3.2 ist diese entsprechend der Reihe nach in die Position P3 an der Blockstation 3.3 und gemäß Figur 3 in die Position P1 an der Blockstation 3.1 verfahrbar. Das jeweilige Brillenglas wird nach dem Positionieren auf der abgegebenen Verbindungsmasse bzw. dem Blockring bis die Verbindungsmasse ausreichend fest ist durch ein Halteteil gehalten.

Nach dem Aufnehmen des jeweiligen Brillenglases 1.1 bis 1.4 über den Transportarm 5 bzw. den Haltekopf 5.1 wird das jeweilige am Transportarm 5 befindliche Brillenglas 1 an der Auswerteeinheit 12 bezüglich der optischen Informationen ausgelesen, bevor es über den Transportarm 5 der jeweiligen Blockstation 3.1 bis 3.2 zugeführt wird.

Die vorgehend beschriebenen Transportvorgänge des Transportarms 5, des Förderarms 6 und der Übergabeeinheit 4 erfolgen - soweit möglich - gleichzeitig, so dass insgesamt eine maximale Taktung erreicht wird.

Bei dem Blockstückvorrat 11 handelt es sich um ein Stapelmagazin, angedeutet durch die gestrichelt gezeichneten Blockstücke, welche stapelweise bzw. in Umfangsrichtung über den Förderarm 6 entnommen werden.

Die Transportkisten 8.1, 8.1' werden über ein Förderband 8.2 entsprechend dem abzulegenden bzw. aufzunehmenden Brillenglas 1.1 in Transportrichtung R nach Bedarf verfahren bzw. getaktet.

### Bezugszeichenliste

- 1: Brillenglas, Halbzeug, Brillenglas-Halbzeug
- 1.1: Brillenglas, Halbzeug, Brillenglas-Halbzeug
- 1.2: Brillenglas, Halbzeug, Brillenglas-Halbzeug
- 1.3: Brillenglas, Halbzeug, Brillenglas-Halbzeug
- 1.4: Brillenglas, Halbzeug, Brillenglas-Halbzeug
- 2.1: Blockstück
- 2.2: Blockstück
- 2.3: Blockstück
- 2.4: Blockstück
- 2.5: Mittelachse
- 3.1: Blockstation, Station
- 3.2: Blockstation, Station
- 3.3: Blockstation, Station
- 4: Übergabeeinheit
- 4.1: Schwenkarm
- 5: Transportarm
- 5.1: Haltekopf
- 5.2: Haltestift
- 5.3: Haltestift
- 5.4: Haltestift
- 6: Förderarm
- 6.1: Halter
- 7: Ausrichtstation, Station
- 7.1: Anlageelement
- 7a: Anlagedorn
- 7b: Anlagedorn
- 8: Brillenglasvorrat, Halbzeugvorrat
- 8.1: Transportkiste
- 8.1': Transportkiste
- 8.2: Förderband
- 8.3: Transportkiste
- 8.4: Transportkiste
- 9: Drehstation, Station
- 10: Dosiereinheit
- 11: Blockstückvorrat, Station
- 12: Auswerteeinheit, Station
- 13: Maschinengestell
- B1: Bewegungsachse
- D1: Drehachse
- P1: Position
- P2: Position
- P3: Position
- K1: Kippachse
- K2: Kippachse
- R: Transportrichtung
- R1: Rotationsachse Blockstation
- R2: Rotationsachse Blockstation
- R3: Rotationsachse Blockstation
- S1: Schwenkachse
- S2: Schwenkachse
- S3: erste Schwenkachse
- S4: zweite Schwenkachse
- T1: Translationsachse
- T2: Translationsachse
- T3: Translationsachse
- T4: Translationsachse
- T5: Translationsachse

## Patentansprüche

1. Vorrichtung zum Aufblocken von Brillengläsern (1.1) auf Blockstücke (2.1) unter Anwendung einer Verbindungsmasse, mittels welcher das Brillenglas (1.1) mit dem Blockstück (2.1) form- und/oder kraftschlüssig verbunden wird, aufweisend:
a) mehrere Stationen (3.1, 9, 11), zwischen denen das Brillenglas (1.1) und/oder das Blockstück (2.1) transportiert wird;
b) mindestens eine Station, die als Blockstation (3.1) ausgebildet ist, in der das Blockstück (2.1) unter Anwendung der Verbindungsmasse mit dem Brillenglas (1.1) verbunden wird,
c) einen Transportarm (5) mit einem daran angeordneten Haltekopf (5.1) zum Positionieren des Brillenglases (1.1) in zumindest der Blockstation (3.1), wobei c1) der Transportarm (5) als Schwenkarm ausgebildet ist und mindestens eine Schwenkachse S1 aufweist, mittels welcher der Transportarm (5) mit dem Haltekopf (5.1) zwischen mindestens zwei Stationen (3.1, 9, 11) bewegbar ist,
d) mindestens ein Förderarm (6) mit einem Halter (6.1) für das Blockstück (2.1) oder ein Brillenglas (1.1),
**dadurch gekennzeichnet, dass** der Förderarm (6) eine koaxial zur Schwenkachse S1 angeordnete Schwenkachse S2 aufweist, mittels welcher der Halter (6.1) zwischen mindestens zwei Stationen (3.1, 9, 11) bewegbar ist, wobei mindestens eine Blockstation (3.1) ortsfest ausgebildet ist.

2. Aufblockvorrichtung nach Anspruch 1,
**dadurch gekennzeichnet,**
**dass** der Transportarm (5) mindestens eine Translationsachse T1 aufweist, mittels welcher der Transportarm (5) mit dem Haltekopf (5.1) relativ zur Blockstation (3.1) bewegbar ist und/oder dass der Haltekopf (5.1) eine Translationsachse T2 aufweist, mittels welcher der Haltekopf (5.1) relativ zum Transportarm (5) bewegbar ist.

3. Aufblockvorrichtung nach Anspruch 1 oder 2,
**dadurch gekennzeichnet,**
**dass** der Halter (6.1) eine Translationsachse T3 aufweist, mittels welcher der Halter (6.1) relativ zum Förderarm (6) in eine Richtung parallel zur Schwenkachse S2 bewegbar ist.

4. Aufblockvorrichtung nach einem der vorhergehenden Ansprüche,
**dadurch gekennzeichnet,**
**dass** eine Station als Ausrichtstation (7) ausgebildet ist, die ein Anlageelement (7.1) aufweist, gegen das das Brillenglas (1.1) zum Ausrichten der relativen Lage zwischen dem Brillenglas (1.1) und dem Haltekopf (5.1) anlegbar ist.

5. Aufblockvorrichtung nach Anspruch 4,
**dadurch gekennzeichnet,**
**dass** die Ausrichtstation (7) eine Translationsachse T4 aufweist, mittels welcher das Anlageelement (7.1) relativ zum Transportarm (5) bewegbar ist.

6. Aufblockvorrichtung nach Anspruch 4 oder 5,
**dadurch gekennzeichnet,**
**dass** das Anlageelement (7.1) zwei Anlagedorne (7a, 7b) aufweist, die zwischen den Haltekopf (5.1) und ein daran befestigtes Brillenglas (1.1) bringbar sind.

7. Aufblockvorrichtung nach einem der vorhergehenden Ansprüche,
**dadurch gekennzeichnet,**
**dass** eine Übergabeeinheit (4) und ein Brillenglasvorrat (8) vorgesehen sind, wobei die Übergabeeinheit (4) zur Aufnahme aus dem Brillenglasvorrat (8) und zur Abgabe an den Brillenglasvorrat (8) dient und die Übergabeeinheit (4) aufweist:
a) eine erste Schwenkachse S3, mittels welcher das Brillenglas (1.1) zwischen dem Brillenglasvorrat (8) und der Ausrichtstation (7) oder dem Transportarm (5) bewegbar ist;
b) eine zweite Schwenkachse S4, über die das Brillenglas (1.1) in eine Upside-down-Lage bringbar ist.

8. Aufblockvorrichtung nach einem der vorhergehenden Ansprüche,
**dadurch gekennzeichnet,**
**dass** eine Station als Drehstation (9) mit einer Drehachse D1 ausgebildet ist, mittels welcher das Blockstück (2.1) mit dem aufgeblockten Brillenglas (1.1) um eine Mittelachse (2.5) des Blockstücks (2.1) drehbar ist.

9. Aufblockvorrichtung nach einem der vorhergehenden Ansprüche,
**dadurch gekennzeichnet,**
**dass** mindestens zwei oder drei Blockstationen (3.1, 3.2, 3.3) vorgesehen sind, die jeweils über den Transportarm (5) und den Förderarm (6) anfahrbar sind und/oder dass eine Station als Blockstückvorrat (11) ausgebildet ist, der zumindest über den Förderarm (6) anfahrbar ist.

10. Aufblockvorrichtung nach einem der vorhergehenden Ansprüche,
**dadurch gekennzeichnet,**
**dass** eine Dosiereinheit (10) für Verbindungsmasse vorgesehen ist, die eine Bewegungsachse B1 aufweist, über die die Dosiereinheit (10) an mindestens zwei verschiedenen Positionen P1, P2, P3 im Bereich der jeweiligen Blockstation (3.1) positionierbar ist.

11. Verfahren zum Aufblocken eines Brillenglases (1.1) auf ein Blockstück (2.1), bei dem
a) ein erstes Brillenglas (1.1) von dem Transportarm (5) aufgenommen wird,
b) das erste Brillenglas (1.1) vom Transportarm (5) in eine erste Blockstation (3.1) abgegeben wird,
c) das erste Brillenglas (1.1) auf ein erstes Blockstück (2.1) aufgeblockt wird und hierzu eine Abkühlzeit in der Blockstation (3.1) belassen wird,
**dadurch gekennzeichnet, dass**
d) während der Abkühlzeit mittels einer Übergabeeinheit (4) ein zweites Brillenglas (1.2) an den Transportarm (5) übergeben wird, welches über den Transportarm (5) zu einer zweiten Blockstation (3.2) transportiert und in eine zweite Blockstation (3.2) abgegeben wird, und
e) während dieses Transportvorgangs und vor dem Abgeben des jeweiligen Brillenglases (1.1, 1.2) an die jeweilige ortsfeste Blockstation (3.1, 3.2) ein Förderarm (6) ein Blockstück (2.1) aus einem Blockstückvorrat (11) entnimmt und in der entsprechenden ortsfesten Blockstation (3.1, 3.2) ablegt, wobei
f) der Transportarm (5) und der Förderarm (6) in Bezug auf die jeweilige Schwenkachse S1, S2 koaxial zueinander bewegt werden.

12. Verfahren nach Anspruch 11,
**dadurch gekennzeichnet,**
**dass** der Förderarm (6) nach der Abkühlzeit das aufgeblockte Brillenglas (1.1) mit einem Blockstück (2.2) der jeweiligen ortsfesten Blockstation (3.1) entnimmt und der Übergabeeinheit (4) oder einer Drehstation (9) zuführt.

13. Verfahren nach einem der Ansprüche 11 oder 12,
**dadurch gekennzeichnet,**
**dass** das Brillenglas (1.1) zwecks Ausrichtung der relativen Lage zum Förderarm (6) mittels der Übergabeeinheit (4) oder mittels des Transportarms (5) gegen ein Anlageelement (7.1) zur Anlage gebracht wird.

14. Verfahren nach Anspruch 13,
**dadurch gekennzeichnet,**
**dass** die Haltekraft der Übergabeeinheit (4) oder des Transportarms (5) beim Anlegen gegen das Anlageelement (7.1) verkleinert wird, damit eine Relativbewegung des Brillenglases (1.1) relativ zur Übergabeeinheit (4) ermöglicht wird.

## Claims

1. A device for block-mounting spectacle lenses (1.1) on block pieces (2.1) by applying a connecting material by means of which the spectacle lens (1.1) is interlocked and/or force-fitted to the block piece (2.1), comprising:
a) several stations (3.1, 9, 11) between which the spectacle lens (1.1) and/or the block piece (2.1) is transported;
b) at least one station designed as a block station (3.1) where the block piece (2.1) is connected to the spectacle lens (1.1) by applying the connecting material,
c) a transport arm (5) including a retaining head (5.1) arranged thereon for positioning the spectacle lens (1.1) at least in the block station (3.1), wherein c1) the transport arm (5) is designed as a pivoting arm having at least one pivot axis S1 about which the transport arm (5) including the retaining head (5.1) can be moved between at least two stations (3.1, 9, 11),
d) at least one conveyor arm (6) including a holder (6.1) for the block piece (2.1) or a spectacle lens (1.1),
**characterized in that**
the conveyor arm (6) comprises a pivot axis S2 which is arranged coaxially to the pivot axis S1 and about which the holder (6.1) can be moved between at least two stations (3.1, 9, 11), wherein at least one block station (3.1) is designed to be stationary.

2. The block-mounting device according to claim 1,
**characterized in that**
the transport arm (5) has at least one translation axis T1 along which the transport arm (5) including the retaining head (5.1) can be moved relative to the block station (3.1), and/or **in that** the retaining head (5.1) has a translation axis T2 along which the retaining head (5.1) can be moved relative to the transport arm (5).

3. The block-mounting device according to claim 1 or 2,
**characterized in that**
the holder (6.1) has a translation axis T3 along which the holder (6.1) can be moved relative to the conveyor arm (6) in a direction parallel to the pivot axis S2.

4. The block-mounting device according to any one of the preceding claims,
**characterized in that**
one station is designed as an alignment station (7) comprising a contact element (7.1) against which the spectacle lens (1.1) can be placed in order to align the relative position of the spectacle lens (1.1) to the retaining head (5.1).

5. The block-mounting device according to claim 4,
**characterized in that**
the alignment station (7) has a translation axis T4 along which the contact element (7.1) can be moved relative to the transport arm (5).

6. The block-mounting device according to claim 4 or 5,
**characterized in that**
the contact element (7.1) comprises two contact pins (7a, 7b) which can be brought to a position between the retaining head (5.1) and a spectacle lens (1.1) secured thereto.

7. The block-mounting device according to any one of the preceding claims,
**characterized in that**
a transfer unit (4) and a spectacle lens supply (8) are provided, wherein the transfer unit (4) serves to pick up lenses from the spectacle lens supply (8) and to place lenses in the spectacle lens supply (8), and the transfer unit (4) has:
a) a first pivot axis S3 about which the spectacle lens (1.1) can be moved between the spectacle lens supply (8) and the alignment station (7) or the transport arm (5);
b) a second pivot axis S4 about which the spectacle lens (1.1) can be brought to an upside-down position.

8. The block-mounting device according to any one of the preceding claims,
**characterized in that**
one station is designed as a turn-around station (9) having an axis of rotation D1 about which the block piece (2.1) including the spectacle lens (1.1) block-mounted thereon can be turned about a central axis (2.5) of the block piece (2.1).

9. The block-mounting device according to any one of the preceding claims,
**characterized in that**
at least two or three block stations (3.1, 3.2, 3.3) are provided, each of which can be approached by the transport arm (5) and the conveyor arm (6), and/or **in that** one station is designed as a block piece supply (11) which can be approached at least by the conveyor arm (6).

10. The block-mounting device according to any one of the preceding claims,
**characterized in that**
a dosing unit (10) for connecting material is provided, which has a movement axis B1, along which the dosing unit (10) can be positioned at at least two different positions P1, P2, P3 near the relevant block station (3.1).

11. A method for block-mounting a spectacle lens (1.1) on a block piece (2.1), in which
a) a first spectacle lens (1.1) is picked up by the transport arm (5),
b) the first spectacle lens (1.1) is placed in a first block station (3.1) by the transport arm (5),
c) the first spectacle lens (1.1) is block-mounted on a first block piece (2.1) and for this purpose is left in the block station (3.1) during a cooling time,
**characterized in that**
d) during the cooling time, a second spectacle lens (1.2) is transferred to the transport arm (5) by means of a transfer unit (4), which second lens is transported to a second block station (3.2) and placed in a second block station (3.2) by the transport arm (5), and
e) during this transport process and before the relevant spectacle lens (1.1, 1.2) is placed in the relevant stationary block station (3.1, 3.2), a conveyor arm (6) picks up a block piece (2.1) from a block piece supply (11) and places it in the relevant stationary block station (3.1, 3.2), wherein
f) the transport arm (5) and the conveyor arm (6) are moved coaxially to each other, relative to the relevant pivot axis S1, S2.

12. The method according to claim 11,
**characterized in that**
once the cooling time has passed, the conveyor arm (6) picks up the block-mounted spectacle lens (1.1) together with a block piece (2.2) from the relevant stationary block station (3.1) and moves it to the transfer unit (4) or a turn-around station (9).

13. The method according to any one of claims 11 or 12,
**characterized in that**
the spectacle lens (1.1) is placed against a contact element (7.1) by means of the transfer unit (4) or by means of the transport arm (5) in order to align its relative position to the conveyor arm (6).

14. The method according to claim 13,
**characterized in that**
the retaining force of the transfer unit (4) or of the transport arm (5) is reduced during placement against the contact element (7.1) in order to allow for relative movement of the spectacle lens (1.1) to the transfer unit (4).

## Revendications

1. Dispositif pour le blocage de verres de lunettes (1.1) sur des pièces de blocage (2.1) avec utilisation d'une matière de liaison au moyen de laquelle le verre de lunettes (1.1) est relié à la pièce de blocage (2.1) par liaison de forme et/ou de force, présentant :
a) plusieurs postes (3.1, 9, 11) entre lesquels le verre de lunettes (1.1) et/ou la pièce de blocage (2.1) est transporté(e) ;
b) au moins un poste qui est constitué en tant que poste de blocage (3.1) dans lequel la pièce de blocage (2.1) est reliée au verre de lunettes (1.1) avec utilisation de la matière de liaison,
c) un bras de transport (5) sur lequel est disposée une tête de retenue (5.1) pour le positionnement du verre de lunettes (1.1) dans au moins le poste de blocage (3.1), c1) le bras de transport (5) étant constitué en tant que bras pivotant et présentant au moins un axe de pivotement S1, au moyen duquel le bras de transport (5) avec la tête de retenue (5.1) peut être déplacé entre au moins deux postes (3.1, 9, 11),
d) au moins un bras transporteur (6) avec un élément de retenue (6.1) pour la pièce de blocage (2.1) ou un verre de lunettes (1.1),
**caractérisé en ce que**
le bras transporteur (6) présente un axe de pivotement S2 disposé de façon coaxiale à l'axe de pivotement S1 et au moyen duquel l'élément de retenue (6.1) peut être déplacé entre au moins deux postes (3.1, 9, 11), au moins un poste de blocage (3.1) étant constitué de façon fixe.

2. Dispositif de blocage selon la revendication 1,
**caractérisé en ce que**
le bras de transport (5) présente au moins un axe de translation T1 au moyen duquel le bras de transport (5) avec la tête de retenue (5.1) peut être déplacé par rapport au poste de blocage (3.1) et/ou **en ce que** la tête de retenue (5.1) présente un axe de translation T2 au moyen duquel la tête de retenue (5.1) peut être déplacée par rapport au bras de transport (5).

3. Dispositif de blocage selon la revendication 1 ou 2,
**caractérisé en ce que**
l'élément de retenue (6.1) présente un axe de translation T3 au moyen duquel l'élément de retenue (6.1) peut être déplacé par rapport au bras transporteur (6) dans une direction parallèle à l'axe de pivotement S2.

4. Dispositif de blocage selon une des revendications précédentes,
**caractérisé en ce**
**qu'**un poste est constitué en tant que poste d'orientation (7) qui présente un élément d'appui (7.1) contre lequel le verre de lunettes (1.1) peut être appuyé pour l'alignement de la position relative entre le verre de lunettes (1.1) et la tête de retenue (5.1).

5. Dispositif de blocage selon la revendication 4,
**caractérisé en ce que**
le poste d'orientation (7) présente un axe de translation T4 au moyen duquel l'élément d'appui (7.1) peut être déplacé par rapport au bras de transport (5).

6. Dispositif de blocage selon la revendication 4 ou 5,
**caractérisé en ce que**
l'élément d'appui (7.1) présente deux mandrins d'appui (7a, 7b) qui peuvent être amenés entre la tête de retenue (5.1) et un verre de lunettes (1.1) fixé sur cette dernière.

7. Dispositif de blocage selon une des revendications précédentes,
**caractérisé en ce**
**qu'**il est prévu une unité de transfert (4) et une réserve de verres de lunettes (8), l'unité de transfert (4) servant au prélèvement dans la réserve de verres de lunettes (8) et à la distribution à la réserve de verres de lunettes (8), et l'unité de transfert (4) présentant :
a) un premier axe de pivotement S3, au moyen duquel le verre de lunettes (1.1) peut être déplacé entre la réserve de verres de lunettes (8) et le poste d'orientation (7) ou le bras de transport (5) ;
b) un deuxième axe de pivotement S4 par le biais duquel le verre de lunettes (1.1) peut être amené dans une position tête en bas.

8. Dispositif de blocage selon une des revendications précédentes,
**caractérisé en ce**
**qu'**un poste est constitué en tant que poste rotatif (9) avec un axe de rotation D1 au moyen duquel la pièce de blocage (2.1) avec le verre de lunettes (1.1) bloqué peut tourner autour d'un axe central (2.5) de la pièce de blocage (2.1).

9. Dispositif de blocage selon une des revendications précédentes,
**caractérisé en ce**
**qu'**il est prévu au moins deux ou trois postes de blocage (3.1, 3.2, 3.3) auxquels il est possible d'accéder respectivement par le biais du bras de transport (5) et du bras transporteur (6) et/ou en ce qu'un poste est constitué en tant que réserve de pièces de blocage (11) auquel il est possible d'accéder au moins par le biais du bras transporteur (6).

10. Dispositif de blocage selon une des revendications précédentes,
**caractérisé en ce**
**qu'**il est prévu une unité de dosage (10) pour la matière de liaison qui présente un axe de déplacement B1, par le biais duquel l'unité de dosage (10) peut être positionnée dans au moins deux positions P1, P2, P3 différentes dans la zone du poste de blocage (3.1) respectif.

11. Procédé de blocage d'un verre de lunettes (1.1) sur une pièce de blocage (2.1), dans lequel
a) un premier verre de lunettes (1.1) est prélevé par le bras de transport (5),
b) le premier verre de lunettes (1.1) est distribué par le bras de transport (5) dans un premier poste de blocage (3.1),
c) le premier verre de lunettes (1.1) est bloqué sur une première pièce de blocage (2.1) et laissé pour cela pendant un temps de refroidissement dans le poste de blocage (3.1), **caractérisé en ce que**
d) pendant le temps de refroidissement, au moyen d'une unité de transfert (4), un deuxième verre de lunettes (1.2) est transféré au bras de transport (5) et est transporté par le biais du bras de transport (5) vers un deuxième poste de blocage (3.2) et délivré dans un deuxième poste de blocage (3.2), et
e) pendant ce processus de transport et avant la distribution du verre de lunettes (1.1, 1.2) respectif au poste de blocage (3.1, 3.2) fixe respectif, un bras transporteur (6) prélève une pièce de blocage (2.1) dans une réserve de pièces de blocage (11) et la dépose dans le poste de blocage (3.1, 3.2) fixe respectif,
f) le bras de transport (5) et le bras transporteur (6) étant déplacés l'un par rapport à l'autre de façon coaxiale par rapport à l'axe de pivotement S1, S2 respectif.

12. Procédé selon la revendication 11,
**caractérisé en ce que**,
après le temps de refroidissement, le bras transporteur (6) prélève le verre de lunettes (1.1) bloqué, accompagné d'une pièce de blocage (2.2), du poste de blocage (3.1) fixe respectif et le conduit à l'unité de transfert (4) ou à un poste rotatif (9).

13. Procédé selon une des revendications 11 ou 12,
**caractérisé en ce que**,
en vue de l'orientation de la position relative par rapport au bras transporteur (6), le verre de lunettes (1.1) est amené en appui contre un élément d'appui (7.1) au moyen de l'unité de transfert (4) ou au moyen du bras de transport (5).

14. Procédé selon la revendication 13,
**caractérisé en ce que**
la force de retenue de l'unité de transfert (4) ou du bras de transport (5) lors de l'appui contre l'élément d'appui (7.1) est réduite afin de permettre un déplacement relatif du verre de lunettes (1.1) par rapport à l'unité de transfert (4).
